# EUROPEAN PATENT APPLICATION

(11) **EP 4 692 018 A1**
(43) Date of publication of application: **11.02.2026**
(21) Application number: 24193374.6
(22) Date of filing: 07.08.2024
(51) Int. Cl.: C04B 7/32, C04B 7/47

(54) **METHOD FOR MANUFACTURING CSA-TYPE CEMENT**

(71) Applicant: Heidelberg Materials AG, 69120 Heidelberg (DE)
(72) Inventor: SKOCEK, Jan, 69120 Heidelberg (DE); ZAJAC, Maciej, 69120 Heidelberg (DE); PATO, Nicolas, 69120 Heidelberg (DE); BULLERJAHN, Frank, 69120 Heidelberg (DE)
(74) Representative: Zellentin & Partner mbB Patentanwälte

(57) **Abstract**

Method for manufacturing CSA cement comprising the steps of sintering a raw meal in a kiln to provide a CSA clinker, passing the CSA clinker into a cooler, adding a calcium sulfate source to the CSA clinker in the cooler, and withdrawing cooled CSA clinker and a dried calcium sulfate from the cooler, wherein the amount and point of addition of the calcium sulfate source to the clinker are adjusted so that the calcium sulfate source is heated to a temperature in the range from 200 to 900 °C by contacting the CSA clinker.

## Description

The present invention relates to a method for manufacturing ye'elimite containing cements, designated CSA cements herein.

Calcium sulfoaluminate (CSA) cements are made from clinkers that include ye'elimite (Ca₄(AlO₂)₆SO₄ or C₄A₃$ in cement chemist's notation) as a key, hydraulically active phase. Two further hydraulically active phases usually found in CSA cements are belite (C₂S) and brownmillerite (C₄AF), which primarily contribute to final strength. Cements containing belite and brownmillerite in substantial amounts are often designated belite-ye'elimite-ferrite (BYF) cement, but herein the designation CSA cement includes them. Another component found useful more recently and potentially contained in CSA cements is ternesite, C₅S₂$ in cement chemist's notation. The term CSA cement covers all types of ye'elimite containing cements, ranging from ye'elimite-rich types to ones with high belite, ferrite, ternesite, calcium aluminate, alite, etc. contents and mixtures thereof.

CSA cements are today used as constituents in expansive cements, in ultrahigh early strength cements and in "low-energy" cements. Hydration of CSA cements leads to the formation of mainly ettringite and/or monophases, e.g., monosulfate. Aluminum hydroxide may be another hydration product of CSA cements. The amount and kinetics of formation strongly depend on the cement composition, e.g., on the amount and type of sulfate bearing phases being present. Special physical properties (such as intentional expansive behavior or rapid strength development) are obtained by adjusting the availability of calcium and sulfate ions. The use of CSA cement as a low-energy alternative to Portland cement has been pioneered in China, where several million tons per year are produced. The energy demand for production is lower because of the decreased kiln temperatures required for sintering the raw meal, the better grindability of the clinker and the lower amount of limestone needed in the raw meal, which needs to be endothermically decarbonated. In addition, the lower limestone content and lower fuel consumption lead to a CO₂ emission around half of that of Portland cement clinker. Many documents describe the manufacturing of CSA cements and/or specific CSA cements, see for example EP 0 838 443 A1, EP 1 171 398 B1, EP 2 744 767 A1, EP 2 744 768 A1, EP 3 255 367 A1, and the references cited therein.

CSA-type cements achieve their highest early and late strength when blended with about 5 - 25 % calcium sulfate. Usually, materials known and used as sulfate carrier in Portland cements are used as the calcium sulfate source. Typical sulfate carriers are gypsum, hemihydrate, anhydrite, and waste materials containing calcium sulfate like the gypsum by-product from flue gas desulfurization (FGD gypsum). Gypsum and anhydrite are favorable materials for CSA cements, also when mixed. In contrast, hemihydrate (bassanite) leads to an extremely fast setting which cannot be controlled by the usual retarders added to control ye'elimite early kinetics. For example, on one hand boron-based retarders fail, as those do not measurably alter the dissolution and precipitation reactions of calcium sulfate phases. On the other hand, organic acids and their salts require a dosage to control hemihydrate reaction which would result in over-retardation of ye'elimite and other cementitious phases that may be present. The problem is already noticeable at hemihydrate contents as low as 1 wt.-%. Frequently, the sulfate carrier is a mixture of gypsum and anhydrite. Further, gypsum is often wet. Therefore, it is common in practice to add the sulfate carrier to the clinker grinding step to utilize the heat generated during grinding for gypsum drying. But during co-grinding with a CSA clinker, gypsum might lose some to all of its chemically bound water and is partially converted to hemihydrate or even anhydrite. Anhydrite, in contrast to gypsum, does not undergo any change during the grinding. Hence, the obtained CSA cement may contain an unknown mixture of calcium sulfates including hemihydrate. The issue is quite challenging for CSA cements as the dosage of sulfate carrier is higher than typical for Portland clinker-based cements and a typical mill might not have sufficient drying capacity when operated at its optimal conditions. Furthermore, the mill does not always reach its ultimate operating temperature in short grinding campaigns. This in turn favors the formation of hemihydrate over anhydrite. Finally, calcium sulfates are often a by-product from other processes or even a waste, with recycled gypsum boards or recycled anhydrite floor screeds from demolition projects being the prime examples. In such materials, leftovers of paper, fibers, and other organic materials, e.g., additives etc., are often found. A frequently used by-product, FGD gypsum, is a relatively pure calcium sulfate source but contains a very high moisture content, i.e., it is typically available as a filter cake or mud-like material. Hence, expensive treatment steps such as drying, and granulation are needed. Consequently, the use of calcium sulfate-rich wastes and by-products is limited and linked to processing costs to generate a calcium sulfate quality suitable for the cement industry. In particular, non-processed recycled gypsum from recycled gypsum boards or recycled anhydrite floor screeds from demolition projects impairs fresh properties of any cement such as Portland, calcium aluminate or calcium sulfoaluminate types. Typical negative, i.e., not controllable, effects are changes in water demand, porosity, flowability, and bleeding. Also, still active components, e.g., organic additives, can affect the cement hydration and strength development. Thus, it is an ongoing object to improve on manufacturing CSA cements, including its various subtypes, and to provide optimized CSA cements.

Surprisingly, it was now found that by adding the sulfate carrier, i.e., the calcium sulfate source, to the clinker cooler, hydrated calcium sulfates are completely converted into anhydrite and organic contaminants are burned out/pyrolyzed. Thereby, it is possible to prevent a formation of hemihydrate during grinding and also problematic components of waste materials are eliminated. Hence, a waste calcium sulfate source is converted into an added value product, reducing the need to use virgin sources. Also, the landfilling of valuable sources could be avoided.

Thus, the above-mentioned objects are achieved by a method for manufacturing CSA cement comprising the steps:
- sintering a raw meal in a kiln to provide a CSA clinker,
- passing the CSA clinker into a cooler,
- adding a calcium sulfate source to the CSA clinker in the cooler, and
- withdrawing cooled CSA clinker and a calcium sulfate, which is dried, dehydrated and/or purified from contaminants, from the cooler,
wherein the amount and point of addition of the calcium sulfate source are adjusted so that the calcium sulfate source is heated to a temperature in the range from 200 to 900 °C by contacting the CSA clinker. The optimum temperature depends on various parameters such as the feeding rate, feeding location, clinker temperature, dwell time, calcium sulfate particle or granule size, humidity, the gypsum content, clinker cooling rate, water vapor partial pressure in the cooler as well as content of organic contaminants to be pyrolyzed/burned, if any.

Thereby, the following advantages are obtained:
- Calcium sulfate is present in the cement as pure anhydrite, which is stable during the grinding process and subsequent storage in a silo.
- A wider variety of calcium sulfate sources can be used because the hydration state of the calcium sulfate in the source is not relevant.
- Calcium sulfate sources contaminated with organic matter can be used as they arise without negative impacts on the final product properties, no prior treatment/purification is needed.
- The low temperature burning with pyrolysis of organics may cause locally reducing conditions in the cooler and hence, reduce the Cr(VI) content in the clinker and, thus, lower the required dosage of chromate reducers according to Annex XVII Paragraph 47 of Regulation (EC) 1907/2006 (REACH).

To simplify the description, the following abbreviations that are usual in the field of cement are used herein: H - H₂O, C - CaO, A - Al₂O₃, F - Fe₂O₃, M - MgO, N - Na₂O, K - K₂O, S - SiO₂ and $ - SO₃. Compounds are mostly named by the pure form, without explicit mentioning of solid solutions, foreign ion substitution and impurities etc. as are usual in technical and industrial materials. As one of ordinary skill in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water-containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more properties of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or acting as fluxes and/or enhancing clinker formation e.g., by forming solid solutions or stabilization of phases. Mineralizers can be part of the starting material components or be added as separate component.

Cement designates a material that, after mixing with an aqueous liquid to form a paste, is able to develop mechanical strength by hydraulic reaction. Thus, cement mostly denotes a clinker ground with or without further components, but also mixtures like super sulfated cement, geopolymer binder, and hydraulic materials not obtained by sintering like a dicalcium silicate obtained by hydrothermal treatment. Composite cement means a mixture containing cement and a supplementary cementitious material. A cement or composite cement is typically used adding water or another liquid and mostly also aggregate. Usually, admixtures and/or additives are added to the cement and/or the paste. As mentioned before, CSA cement designates a cement comprising ye'elimite as key hydraulic phase, irrespective of the amount of belite, ternesite, brownmillerite, calcium aluminates, pleochroite, ellestadite, periclase, free lime, calcium sulfates (e.g. anhydrite), calcium alkali sulfates (e.g. calciolangbeinite, glauberite), alkali sulfates (e.g. arcanite, aphthitalite, thenardite), alite and others contained.

A supplementary cementitious material (abbreviated SCM) is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium oxide/calcium hydroxide and/or products of the hydraulic reaction of the ground clinker, e.g., calcium silicates liberate calcium hydroxide during hardening. Pozzolanic materials are characterized by a content of reactive silica and/or alumina which form strength-providing calcium silicate hydrates and calcium aluminate hydrates, respectively, during hydration of the clinker together with the calcium hydroxides liberated. In practice, the border between latent hydraulic and pozzolanic materials is not well defined, for example, fly ashes can be both latent hydraulic and pozzolanic, depending on their calcium oxide content. Consequently, the term SCM designates both latent hydraulic as well as pozzolanic materials. However, not reactive, or only slightly reactive materials like limestone that substantially do not take part in the hydraulic reactivity have to be clearly differentiated from SCM, with which they are sometimes summarized as mineral additions.

Hydraulically hardening building material means a wet mixture that is able to harden hydraulically and comprises a cement or composite cement as well as optionally any other addition contained to adjust the properties like final strength, processability of the wet mixture and strength development properties, to the intended use of the building material. For example, a concrete used to build a bridge needs other properties than a screed for casting a floor or a mortar for laying bricks.

Building structure denotes the hardened building material, e.g., a precast concrete element or a floor or a bridge part from cast-in-place concrete.

According to the present invention, the manufacturing of CSA cements is improved by enabling the use of a broader range of calcium sulfate sources. As mentioned before, the key hydraulically reactive phase in CSA cements is ye'elimite, while other phases like belite, calcium aluminate ferrite, ternesite are often also comprised. The composition of several commercially available CSA cements is listed in the following.

### Lafarge Aether^{®}:

| | | | |
|---|---|---|---|
| belite (α; +/-β) C₂S | 40 - 75 %; | ye'elimite C₄A₃$ | 15 - 35 %; |
| ferrite C₂(A,F) | 5 - 25 %; | secondary phases | 0.1 - 10 % |

### Heidelberg Materials Italia Cementi Ali Pre^{®}:

| | | | |
|---|---|---|---|
| belite (α; +/-β) C₂S | 10 - 25 %; | ye'elimite C₄A₃$ | 50 - 65 %; |
| calcium sulfates | 0 - 25 %; | secondary phases | 1 - 20 % |

### Cemex CSA:

| | | | |
|---|---|---|---|
| belite (α; +/-β) C₂S | 10 - 30 %; | ye'elimite C₄A3$ | 20 - 40 % |
| calcium sulfates | > 1 %; | alite C₃S | > 1 - 30 %; |
| free lime CaO | < 0.5 - 6 %; | portlandite Ca(OH)₂ | 0 - 7 %; |
| secondary phases | 0 - 10 % | | |

### Denka CSA

| | | | |
|---|---|---|---|
| belite (α; +/-β) C₂S | 0 - 10 %; | ye'elimite C₄A₃$ | 15 - 25 %; |
| anhydrite C$ | 30 - 40 %; | portlandite Ca(OH)₂ | 20 - 35 %; |
| free lime CaO | 1 - 10 %; | secondary phases | 0 - 10 % |

### China Type II & III CSA

| | | | |
|---|---|---|---|
| belite (α; +/-β) C₂S | 10 - 25 %; | ye'elimite C₄A₃$ | 60 - 70 %; |
| ferrite C₂(A,F) | 1 - 15 %; | secondary phases | 1 - 15 % |

### Barnstone CSA

| | | | |
|---|---|---|---|
| belite (α; +/-β) C₂S | 22 %; | ye'elimite C₄A3$ | 60 %; |
| aluminate C₁₂A₇ | 5 %; | alite C₃S | 8 %; |
| ferrite C₂(A,F) | 4 %; | secondary phases | 1 % |

The manufacturing of the CSA clinker proceeds in the manner known per se, i.e., usually a raw meal of adequate composition is generated, preheated, mostly also precalcined, and then fed to a kiln, usually a rotary kiln. In the kiln, the raw meal is sintered to provide the CSA clinker, generally in the form of nodules. Typically, the CSA clinker comprises
10 to 80 wt.-% ye'elimite, preferably 20 to 70 wt.-%,
20 to 70 wt.-% belite, preferably 30 to 60 wt.-%,
0 to 30 wt.-% ferrite, preferably 5 to 20 wt.-%,
0 to 30 wt.-% ternesite, preferably 0 to 20 wt.-%,
0 to 25 wt.-% other or minor components, preferably 0 to 15 wt.-%
wherein all components in one specific clinker add up to 100 %. Minor components designate trace components and components present in low amounts (typically below 5 wt.-%, but sometimes also up to 10 or 15 or 25 wt.-%) which are derived from raw materials, fuels, refractories, or other plant materials. They can also result from the addition of fluxes and mineralizers added to affect the reactions of clinker formation or the properties of the product. Fluxes and mineralizers usually enhance melt formation and/or the formation of specific phases or lower the required temperature. Fluxes and mineralizers can also be present in raw materials. Typical minor components (often also designated secondary phases or minor phases) in CSA clinker are aluminates, free lime, periclase, pleochroite, ellestadite, calcium sulfate (e.g., anhydrite), calcium alkali sulfates (e.g., calciolangbeinite, glauberite), alkali sulfates (e.g., arcanite, aphthitalite, thenardite), alite, calcite, and XRD amorphous phases.

As is also known and usual, the CSA clinker obtained by sintering in the kiln enters a cooler, which is normally directly attached to the kiln. In the cooler, the temperature of the CSA clinker is reduced from the typical 900 to 1300 °C at the kiln exit and cooler inlet to a range from 40 to 200 °C at the cooler exit. The effective reduction of the clinker temperature is obligatory for maintaining clinker properties, the clinker transport, storage, and further processing like grinding, mixing with calcium sulfate and optionally further components, storing, and packaging/distributing the CSA cement.

Normally, a CSA clinker does not contain the desired amount of calcium sulfate so that anhydrite is added to the CSA clinker to make the CSA cement. A useful amount of calcium sulfate in the final CSA cement ranges from 5 to 25 wt.-%, or from 5 to 15 wt.-%, with respect to the total CSA cement weight. For special types, the optimum calcium sulfate dosage can deviate, e.g., for belite-rich clinker the optimum dosage is typically in the range of about 1 to 15 wt.-%, with respect to the total belitic CSA cement weight.

Suitable calcium sulfate sources are the ones known in the prior art like gypsum and anhydrite, but also hemihydrate and mixtures of calcium sulfate with variable and unknown crystal water content. Also suitable are waste materials and by-products containing calcium sulfate in an appreciable amount. Typically, an amount of calcium sulfate contained in the calcium sulfate source should be ≥ 50 wt.-%, preferably ≥ 65 wt.-%, most preferred ≥ 85 wt.-%, measured according to EN 196-2 and expressed as CaSO₄. One often-used by-product is recycled calcium sulfate from plaster boards, anhydrite screeds and similar construction materials, which had to be purified up to now. According to the present invention, contaminants can remain. Specifically organic contaminants do not interfere, because they are burned off or pyrolyzed in the cooler. Another often used calcium sulfate source, wet FGD gypsum, can and should be used without drying, it is safely dried by adding it to the clinker cooler. Thus, various levels of humidity, ranging from e.g., 5 to 40 wt.-% are no problem. Other useful waste materials and by-products are, for example, but not limited to, phosphogypsum, fluorogypsum, white or red gypsum from TiO₂ production, gypsum from anhydrite floor screed recycling, and synthetic gypsum sources from e.g., wastewater treatment, water purification systems, and production of organic acids such as citric or lactic acid.

The calcium sulfate source can also be mixed with one or more other material(s), for example, but not limited to, construction and demolition waste, paper ash, paper sludge, soil, contaminated soil, clay, and contaminated clay. Such other materials are dried, too, and also crystal water and chemically bound water is removed. Organic contaminants are burned off.

When organic matter is present as contaminant in the calcium sulfate source or in the other material(s) added together with the calcium sulfate source, a slightly reducing atmosphere is generated at relatively low temperatures, linked to the burning/pyrolysis of the organic matter. This advantageously prevents, or at least substantially diminishes, a decomposition of sulfate bearing phases like ye'elimite, anhydrite etc., which is advantageous for the CSA cement properties. It may also help to convert/reduce a fraction of water-soluble hexavalent chromium to less soluble oxidation states. Thereby, the demand for costly chromate reducers may be reduced. Therefore, an addition of other material(s), comprising organic contaminants, or even being mainly organic matter, can be desirable according to the invention.

The calcium sulfate source is preferably added in the form of granules or crushed pieces to avoid dusting. Suitable sizes (determined by screening) are D₁₀ > 0.5 mm or D₁₀ > 1 mm or D₁₀ > 2 mm and passing a 75 mm or 50 mm or 30 mm sieve. Finer sources can be transformed into coarser particles with any process known as such. Preferably, fine particles are agglomerated, granulated, compressed, or extruded to form lumps/pellets/pieces/cylinders of at least 0.1 cm or 0.2 cm in the smallest extension and up to 5 cm or 3 cm or 1 cm in the maximum extension. Thereby, the formed particles are large enough to avoid them being suspended and relocated in the cooling gas stream on the one hand. On the other hand, the particles are small enough to ensure rapid mixing with the clinker nodules and fast heat transfer. Particles with high aspect ratio could be bigger in their maximum extension and/or smaller in their minimum extension, but would probably break up during processing and not mix as well with the typically rounded clinker nodules having sizes in the range from a few mm to a few cm.

Suitable temperatures for treating the calcium sulfate source in the cooler range from 200 to 900 °C. The optimum temperature depends on the amount of water contained and the amount and type of contaminants to be burned/pyrolyzed. Temperatures at the low end, i.e., from 200 to 300 °C, are sufficient for calcium sulfate dewatering, i.e., converting gypsum and hemihydrate to anhydrite. Higher temperatures are needed to burn/pyrolyze organic contaminants and/or to calcine added other material(s). Ideal temperatures for decomposition of organic matter like paper and organic fibers range from 200 to 450 °C. For calcination of added other material(s), e.g., clay, temperatures at the upper end are normally needed, e.g., from 450 to 900 °C, preferably from 550 to 850 °C, most preferably from 650 to 750 °C.

The cooled CSA clinker leaves the cooler mixed with the dried - and if applicable also cleaned from contaminants by burning/pyrolyzing - calcium sulfate source, possibly also mixed with dried and/or calcined other material(s) that have been added to the cooler together with the calcium sulfate source. Typical material temperatures at the cooler exit range from 40 to 200 °C.

The CSA cement or CSA composite cement (abbreviated CSA (composite) cement in the following) is then obtained by grinding as known per se. It is envisaged to add further intended components of the CSA (composite) cement during the grinding step. Grinding takes place in a manner and in devices known per se. Furthermore, grinding aids can be added. Useful are for example but not limited to alkanolamines like monoethanolamine, diglycolamine, diethanolamine, diisopropanolamine, methyldiethanolamine, triethanolamine, triisopropanolamine, and diethanol-isopropanolamine.

The grinding provides the CSA cement - or CSA composite cement when e.g., clay has been added as other material or an SCM has been added during grinding - ready for use. Of course, it is possible to add further desired components especially one or more SCM, additive and/or admixture after grinding. Normally, the CSA (composite) cement is passed into a storage means, mostly a silo, until use. It can also be packaged in small transportable silos or in bags which are directly shipped to the point of sale or a construction site. Stored CSA (composite) cement can be packaged or directly used to make ready-mixed concrete when needed.

A preferred fineness of the cement, with or without other materials, corresponds to a particle size distribution with a D₉₀ ≤ 90 µm, preferably D₉₀ ≤ 60 µm, and most preferred D₉₀ ≤ 40 µm. The Rosin Rammler Parameter (slope) n can vary from 0.6 - 1.4, and preferably from 0.7 to 1.2. Particle size distribution is generally determined by laser granulometry for sizes below 1 mm or 2 mm, and by sieving for sizes above 1 mm or 2 mm. For special applications, e.g., requiring fast setting or very high early strength, also finer grinding to D₉₀ ≤ 20 µm can be targeted. When a particle size distribution extends from below to above those sizes, the most suitable method for the range of most interest is chosen. A typical Blaine fineness ranges from 2000 to 10000 cm²/g, preferably from 3000 to 9000 cm²/g, most preferred from 4000 to 8000 cm²/g. A typical BET (Brunauer-Emmett-Teller) surface ranges from 0.1 to 20 m²/g, preferably from 0.5 to 10 m²/g, most preferred from 1 to 5 m²/g.

The CSA (composite) cement or a hydraulic building material made with it like concrete can comprise admixtures and/or additives, for example but not limited to admixtures like retarders, dispersants, defoaming agents, air-entraining agents, water reducing agents, superplasticizers, and/or additives like pigments, fibers, and any mixture of two or more of the mentioned admixtures and additives. If admixtures and/or additives are added, they are used in the amounts known per se and adjusted according to need as usual.

The CSA (composite) cement made according to the invention is useful for all applications where known CSA (composite) cements are used. It can also replace Portland cement and other cements according to DIN EN 197-1. Possible applications are, for example but not limited to, ready mix concrete, cast-in-place concrete, repair mortar, precast concrete, earth-dry concrete, self-levelling floor screed, 3D printing and shotcrete application.

The CSA cement made according to the invention can be a composite cement, i.e., used in blends with supplementary cementitious materials and/or fillers, especially in blends with any constituents specified in DIN EN 197-1. Suitable constituents besides the CSA cement are for example, but not limited to, Portland cement clinker, limestone, ground granulated blast-furnace slag (GGBS), siliceous fly ash, calcareous fly ash, burnt shale, and other latent hydraulic and/or pozzolanic materials. If such constituents are added to the CSA cement they are used in the appropriate fineness, i.e., ground. It is also possible to add constituents, which are not ground or not ground fine enough, to the CSA clinker and grind them together with the clinker. As mentioned, for constituents that need a drying or calcination it can be advantageous to add them at least partly to the clinker cooler together with the calcium sulfate source. Preferred amounts of these further constituents are as follows: latent hydraulic materials such as GGBS from 0 to 35 wt.-%, mineral fillers like limestone or other rock flour from 0 to 20 wt.-%, pozzolanic materials like siliceous fly ash and natural pozzolans from 0 to 35 wt.-%, Portland cement clinker from 0 to 35 wt.-%. Preferably, the reactive components of a CSA composite cement (CSA cement, Portland cement clinker, latent hydraulic material, pozzolanic material) contain at least 70 wt.-% CSA cement, preferably at least 80 wt.-%, most preferred at least 90 wt.-%.

In one embodiment, the early compressive strength of the CSA (composite) cement is enhanced by adding an accelerator, like aluminum sulfate, calcium nitrate, various carbonates, hydroxide types, Portland clinker/cement, portlandite, some chlorides, polycarboxylate ethers, alkali metal sulfates, carbonates, or hydroxides. For example, sodium sulfate, sodium hydroxide, sodium carbonate or sodium bicarbonate are useful. A suitable dosage ranges from 0.1 to 5.0 wt.-% with respect to dry cement. Also useful are alkali metal carbonates, e.g., lithium carbonate. The dosage is typically in the range from 0.005 to 0.1 wt.-%, preferably from 0.01 to 0.05 wt.-%, with respect to dry cement. It is also possible to combine two or more accelerators, e.g., an alkali metal sulfate and an alkali metal carbonate, the dosages remain as stated.

Typically, the CSA (composite) cement will be mixed with water and aggregate for use. A water/cement-ratio (w/c) of 0.6 or lower is often suitable, whereas the usual w/c ranges from 0.4 to 0.5, except for applications such as screed and earth-dry concrete.

The invention will be illustrated further with reference to the attached figure, without restricting the scope to the specific embodiment described. The invention includes all combinations of described and especially of preferred features that do not exclude each other. If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

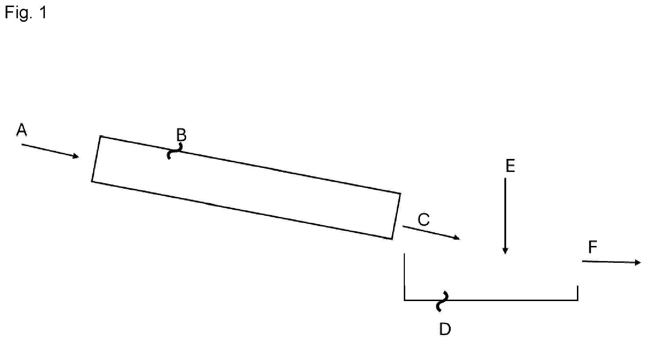

Figure 1 illustrates the method according to the invention. It shows a kiln and cooler schematically, with material streams indicated as arrows. Raw meal A is fed to the kiln B, usually a rotary kiln, and converted into hot CSA-type clinker C in the kiln. The clinker C then enters a cooler D, typically a grate cooler, to be rapidly cooled down. A moist calcium sulfate source E containing gypsum is added to the cooler D at a position selected so that it is dried and tempered. Thereby, anhydrite forms as the only calcium sulfate form. The anhydrite also mixes with the cooled clinker C, providing the unground CSA-type cement F, which is withdrawn from the cooler D.

The addition of one or more sulfate sources to the clinker cooler can also be used for other cements than CSA cements, especially for Portland cements and Portland composite cements. However, for those cements more raw materials are possible and a presence of hemihydrate is not problematic. Still, using addition to the clinker cooler is advantageous when the sulfate carrier used is a waste or by-product that would need drying and/or purification otherwise like FGD gypsum (drying), recycled gypsum boards (purification), and recycled floor screeds (purification and drying if wet) or floor screeds from demolition (mainly purification).

## Claims

1. Method for manufacturing a CSA cement comprising the steps:
- sintering a raw meal in a kiln to provide a CSA clinker,
- passing the CSA clinker into a cooler,
- adding a calcium sulfate source to the CSA clinker in the cooler, and
- withdrawing cooled CSA clinker and a calcium sulfate, which has been dried and/or purified from contaminants, from the cooler,
wherein the amount and point of addition of the calcium sulfate source are adjusted so that the calcium sulfate source is heated to a temperature in the range from 200 to 900 °C by contacting the CSA clinker.

2. Method according to claim 1, wherein the CSA clinker comprises 10 to 80 wt.-% ye'elimite, preferably 20 to 70 wt.-%,
20 to 70 wt.-% belite, preferably 30 to 60 wt.-%,
0 to 30 wt.-% ferrite, preferably 5 to 20 wt.-%,
0 to 30 wt.-% ternesite, preferably 0 to 20 wt.-%,
0 to 25 wt.-% minor components, preferably 0 to 15 wt.-%,
wherein all components in one specific clinker add up to 100 %.

3. Method according to claim 1 or 2, wherein an amount of calcium sulfate in the final CSA cement ranges from 5 wt.-% to 15 wt.-% or 25 wt.-%, with respect to the total CSA cement weight.

4. Method according to anyone of claims 1 to 3, wherein gypsum, anhydrite, hemihydrate, mixtures of calcium sulfates with variable and unknown crystal water content, and/or waste materials and by-products containing calcium sulfate are used as the calcium sulfate source.

5. Method according to anyone of claims 1 to 4, wherein the amount of calcium sulfate contained in the calcium sulfate source is ≥ 50 wt.-%, preferably ≥ 65 wt.-%, most preferred ≥ 85 wt.-%.

6. Method according to anyone of claims 1 to 5, wherein the calcium sulfate source is mixed with other materials, such as construction and demolition waste, paper ash, paper sludge, soil, contaminated soil, clay, contaminated clay, and mixtures of two or more thereof, before adding the calcium sulfate source to the cooler.

7. Method according to anyone of claims 1 to 6, wherein the temperature to which the calcium sulfate source is heated in the cooler is adjusted to range from 200 to 300 °C for drying, or adjusted to range from 200 to 450 °C for decomposition of organic contaminants, or adjusted to range from 450 to 900 °C for calcination, wherein the temperature range is selected depending on the amount of water and type and amount of contaminant or other material added to the sulfate source to be burned/pyrolyzed or calcined.

8. Method according to anyone of claims 1 to 7, wherein grinding provides a particle size distribution of the CSA cement, determined by laser granulometry, of D₉₀ ≤ 90 µm and preferably D₉₀ ≤ 60 µm, and/or the Rosin Rammler Parameter (slope) n ranges from 0.6 - 1.4, preferably from 0.7 to 1.2, and/or a Blaine fineness ranges from 2000 to 10000 cm²/g, preferably from 3000 to 9000 cm²/g, most preferred from 4000 to 8000 cm²/g.
